# EUROPÄISCHE PATENTSCHRIFT

(11) **EP 0 343 108 B1**
(45) Veröffentlichungstag und Bekanntmachung des Hinweises auf die Patenterteilung: **31.08.1994**
(21) Anmeldenummer: 89810342.9
(22) Anmeldetag: 09.05.1989
(51) Int. Cl.: C08K 5/00, C09B 67/00

(54) **Harzzusammensetzungen**
Resin compositions
Compositions de résine

(30) Priorität: 17.05.1988 GB 8811649
(43) Veröffentlichungstag der Anmeldung: 23.11.1989
(73) Patentinhaber: CIBA-GEIGY AG, 4002 Basel (CH)
(72) Erfinder: Langley, Robert, Glasgow, Scotland G77 5AS (GB); Campbell, Colin Dennis, Dr., Newport Delaware 19804 (US)

(56) Entgegenhaltungen:
- DATABASE WPI, no. 78-44617A, Derwent&&JP-A-53051241 (SUMITOMO CHEMICAL KK) 10-05-1978
- DATABASE WPIL, no. 82-58535E, Derwent&&JP-A-57092036 (TOYO INK MFG KK) 08-06-1982

## Beschreibung

Die vorliegende Erfindung betrifft pigmentierte thermoplastische Harze, worin das Pigment durch Zusatz eines sulfonierten Imidomethyl-Phthalocyanin hitzestabilisiert wird.

In JP-A Sho 57-92036 ist eine Methode zur Hitzestabilisierung von Kupferphthalocyanin enthaltenden Polyolefinen durch Zusatz eines Kupferphthalocyaninderivates beschrieben. Letzteres wird durch Umsetzung von Chlormethylkupferphthalocyanin, welches gegebenenfalls halogeniert sein kann, mit Methylphthalimid hergestellt. Man findet kein Anzeichen dafür, dass das Kupferphthalocyaninderivat Sulfogruppen enthalten soll. Ausserdem wird es als Stabilisator für das Polyolefin-Substrat, nicht für das das Substrat färbende Pigment eingesetzt: Die Versuchsergebnisse betreffen einzig und allein den Zerfallsgrad des Substrats, aber in keinem Fall die Einbusse an Pigmenteigenschaften.

Zudem beschreibt JP-A Sho 53-512411 ein spezifisches Verfahren zur Färbung von ABS-Harz mit einem Gemisch aus einem Kupferphthalocyaninpigment und einem mit Phthalimidomethyl substituierten Kupferphthalocyaninpigment. Das mit Phthalimidomethyl substituierte Kupferphthalocyanin wird wohl als Stabilisator für das Phthalocyaninpigment eingesetzt, enthält jedoch keine Sulfogruppen.

Es wurde nun gefunden, dass die Einarbeitung einer Kleineren stabilisierenden Menge bestimmter sulfonierter mit Phthalimidomethyl substituierter Phthalocyanine zusammen mit einem Phthalocyaninpigment in ein thermoplastisches Harz, dem Pigment des pigmentierten Harzsystems eine ausserordentliche Hitzestabilität verleiht.

Die vorliegende Erfindung betrifft demnach eine thermoplastische Harzzusammensetzung enthaltend
A) ein thermoplastisches Harz,
B) ein Metallphthalocyaninpigment und
C) 0,5 bis 30 Gew.%, bezogen auf das Pigment B) eines als Hitzestabilisator für die Komponente B wirkenden Metallphthalocyanins der Formel 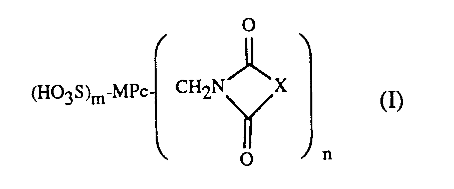
worin Pc ein unsubstituierter oder durch bis zu vier Chlor oder Bromatome substituierter Phthalocyaninrest ist, M Wasserstoff oder ein zur Bildung eines Metallphthalocyanins geeignetes Metall bedeutet, m einen Wert zwischen 0,05 und 1,0 und n einen Wert zwischen 0,1 und 4,0 bedeuten und X ein Rest ist, das zusammen mit der Gruppe 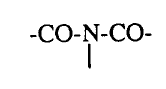
ein 5-, 6- oder 7-gliedriges cyclisches Imid bildet.

Der Phthalocyaninrest Pc ist vorzugsweise nur durch ein Chlor- oder Bromatom substituiert und ist besonders bevorzugt unsubstituiert.

Bedeutet M ein zur Bildung eines Metallphthalocyanins geeignetes Metall, so ist es zweckmässig Magnesium, Aluminium, Kobalt, Nickel, Eisen, Zink, Blei, Zinn oder insbesondere Kupfer.

MPc bedeutet vorzugsweise einen Kupferphthalocyaninrest ohne Chlor oder Brom
m ist bevorzugt ein Wert zwischen 0,05 und 0,2.
n ist bevorzugt ein Wert zwischen 1,0 und 3,0.

Das thermoplastische Harz (A) kann Gummi oder einer der sogenannten Ingenieurwerkstoffe (Engineering Plastics) sein, wie z.B. Polyethylen hoher Dichte (HDPE), Polybutylenterephthalat (PBTP), Polycarbonat (PC), Polyamid (PA), Polyphenylenoxid (PPO), Polyether-Etherketon (PEEK), Polyphenylensulfid (PPS), Polyethersulfon (PES), Acrylnitril-Butadien-Styrol (ABS), Polypropylen (PP), Polystyrol (PS), Polyacetal (POM) und deren Legierungen, wie z.B. eine PC/PBTP-Legierung.

Das Metallphthalocyanin-Basispigment (B) kann chloriert oder unchloriert sein. Ist es chloriert, so kann es bis zu 6 Gew.%, bevorzugt 1 bis 3 Gew.% Chlor enthalten. Besonders bevorzugt ist das Phthalocyanin (B) unchloriert, insbesondere unchloriertes Kupferphthalocyanin.

Die Pigmentkomponente (B) ist in der erfindungsgemässen Harzzusammensetzung in einer Menge von bis zu 30 Gew.%, bevorzugt von 0,001 bis 3 Gew.%, bezogen auf die Komponente (A) vorhanden.

Wenn in Formel I X zusammen mit der Gruppe 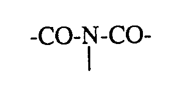
ein 5-gliedriges cyclisches Imid bildet, so handelt es sich bei solchen Imiden z.B. um Succinimid, Maleinimid, Itaconimid, Phthalimid, Tetrahydrophthalimid, cis-5-Norbornen-endo-2,3-dicarboximid-, 3,6-Endoxo-1,2,3,6-tetrahydrophthalimid-, 1,2- oder 2,3-Naphthalindicarboximid oder Chinolinimid (Pyridin-2,3-dicarboximid), wobei jedes davon unsubstituiert oder durch ein oder mehrere Halogenatome, vorzugsweise Chlor- oder Bromatome, eine oder mehrere C₁-C₂₀-Alkyl-, C₃-C₂₀-Alkenyl-, Nitro- oder Carboxygruppen substituiert ist.

Wenn in Formel I X zusammen mit der Gruppe 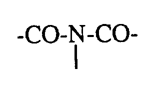
ein 6-gliedriges cyclisches Imid bildet, so handelt es sich bei solchen Imiden z.B. um Glutarimid, 3,3-Tetramethylenglutarimid, 1,8-Naphthalindicarboximid oder Perylen-1-12-dicarboximid, wobei jedes davon unsubstituiert oder durch ein oder mehrere Halogenatome, vorzugsweise Chlor- oder Bromatome, eine oder mehrere C₁-C₂₀-Alkyl-, C₃-C₂₀-Alkenyl-, Nitro- oder Carboxygruppen substituiert ist.

Wenn in Formel I X zusammen mit der Gruppe 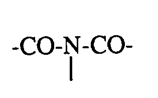
ein 7-gliedriges cyclisches Imid bildet, so handelt es sich bei solchen Imiden z.B. um Adipinsäureimid oder Diphensäureimid, wobei jedes davon unsubstituiert oder durch ein oder mehrere Halogenatome, vorzugsweise Chlor- oder Bromatome, eine oder mehrere C₁-C₂₀-Alkyl-, C₃-C₂₀-Alkenyl-, Nitro- oder Carboxygruppen substituiert ist.

5-Gliedrige cyclische Imide sind bevorzugt, insbesondere Dimethylmaleinimid und ganz besonders Phthalimide, d.h. wenn X o-Phenylen bedeutet, und die wie oben beschrieben substituierten Reste davon.

Die Sulfosäuregruppen enthaltenden Verbindungen der Formel I sind bekannt und können gemäss der in der US-PS 2 761 868 beschriebenen Methode hergestellt werden. Gemäss einer in der eben erwähnten US-PS als bevorzugt beschriebenen Methode wird die Imidomethylierung des Kupferphthalocyanins vorerst vorgenommen und anschliessend sulfoniert.

Ein weiterer Gegenstand der vorliegenden Erfindung ist ein Verfahren zur Hitzestabilisierung eines Pigments in einem pigmentierten thermoplastischen Harz, durch Einarbeitung eines Metallphthalocyaninpigments und, als Hitzestabilisator für das Metallphthalocyaninpigment, 0,5 bis 30 Gew.% eines sulfonierten Imidomethylphthalocyanins der Formel I gemäss der oben angegebenen Definition, bezogen auf das Metallphthalocyaninpigment, in das thermoplastische Harz.

Die Vebindung der Formel I (Komponente C) wird zweckmässig in das rohe Basis-Metallphthalocyaninpigment (Komponente B) während der Konditionierung des letzteren eingearbeitet und die erhaltene Mischung wird anschliessend in das thermoplastische Harz einverleibt. Bevorzugt werden 3 bis 15 Gew.% der Verbindung der Formel I, bezogen auf das Metallphthalocyanin, in das Metallphthalocyanin (B) eingearbeitet.

Die Konditionierung oder Umwandlung des rohen Basis-Phthalocyaninpigments in die Pigmentform kann durch Mischen des rohen Phthalocyanins mit dem sulfonierten Imidomethylphthalocyanin der Fomel I und Mahlen der Mischung erfolgen. Die Mahlung wird in Gegenwart eines Mahlhilfsmittels in fester Partikelform durchgeführt, welches nach dem Mahlvorgang entfernt werden kann. Beim Mahlhilfsmittel in fester, Partikelform kann es sich um ein Alkali- oder Erdalkalimetallsalz einer Mineralsäure handeln, wie z.B. Natrium- oder Calciumchlorid. Es kann in einer Menge bis zu einem Maximum von 500 Gew.%, bezogen auf die Gesamtmenge der CuPc-Zusammensetzung eingesetzt werden. Zusätzlich kann auch ein Alkalimetallsalz einer organischen Säure (z.B. Natriumacetat) in einer Menge zwischen 2,5 und 25 Gew.%, bezogen auf das Mahlhilfsmittel, während des Mahlprozesses eingesetzt werden.

Wenn das als Ausgangsprodukt eingesetzte rohe Phthalocyanin Kupferphthalocyanin ist, führt die obenerwähnte Konditionierung zu einem stabilen Kupferphthalocyanin in Pigmentform, welches vorwiegend in der Alpha-Kristallmodifikation vorliegt. Wenn es erwünscht ist, das rohe Kupferphthalocyanin in einer Pigmentform der Beta-Kristallmodifikation umzuwandeln, so ist es zweckmässig die Mahlung in Gegenwart von 0,5 bis 10 Gew.% einer organischen Flüssigkeit, wie z.B. Diethylanilin, bezogen auf die gesamte Kupferphthalocyaninzusammensetzung, vorzunehmen.

Eine zweite Methode zur Herstellung von Phthalocyanin in Pigmentform mit der gewünschten Partikelgrösse und mit erhöhten koloristischen Eigenschaften besteht in der Mahlung und Behandlung des Basis-Phthalocyaninmaterials mit einem polaren zumindest teilweise im Wasser mischbaren organischen Lösungsmittels, wie z.B. Isopropanol. Das sulfonierte Imidomethylphthalocyanin der Formel I kann jederzeit, während der Konditionierung einverleibt werden.

Eine weitere Methode zur Umwandlung des rohen Phthalocyanin-Ausgangsmaterials in die Pigmentform besteht darin, das rohe Phthalocyanin mit dem sulfonierten Imidomethylphthalocyanin der Formel I zu mischen, der Mischung konzentrierte Schwefelsäure zuzugeben und das Phthalocyanin durch Eintragen der Schwefelsäurelösung oder -aufschlämmung in Wasser wieder auszufällen.

Die Menge an einzusetzender konzentrierter Schwefelsäure kann zwischen 200 und 1500 Gew.%, bezogen auf die gesamte Phthalocyaninzusammensetzung, variieren und die Säurebehandlung kann bei Temperaturen zwischen 0 und 100°C, bevorzugt zwischen 40 und 80°C vorgenommen werden.

Wenn erwünscht kann auch ein oberflächenaktives Mittel dem Wasser vor dem Eintragen der sauren Lösung oder Aufschlämmung zugegeben werden, zweckmässig in einer Menge von 0,5 bis 10 Gew.%, bezogen auf die Gesamtmenge der Phthalocyaninzusammensetzung. Ein geeignetes oberflächenaktives Mittel ist Dodecylbenzolsulfonsäure.

Wird als Ausgangsmaterial rohes Kupferphthalocyanin verwendet, so ergibt die obenerwähnte saure Konditionierung ein stabiles Alpha-Kupferphthalocyanin in Pigmentform. Es kann, wenn erwünscht, einer Mahlung unterworfen werden, z.B. wie oben beschrieben, um ein Pigment bestimmter Partikelgrösse zu erhalten.

Eine vierte alternative Methode für die Umwandlung des rohen Phthalocyanins in die Pigmentform besteht darin, dass das rohe Phthalocyanin allein mit der konzentrierten Schwefelsäure behandelt wird und danach durch Eintragen der Lösung in Wasser wieder ausgefällt wird, das erhaltene Produkt z.B. wie oben beschrieben gemahlen wird, wobei das sulfonierte Imidomethylphthalocyanin der Formel I während des Mahlprozesses oder in einem späteren Zeitpunkt der Konditionierung einverleibt wird.

Die Zusammensetzung in Pigmentform enthaltend das Metallphthalocyanin (B) und das sulfonierte Imidomethylphthalocyanin der Formel I kann in das thermoplastische Harz nach allgemein üblichen Methoden eingearbeitet werden.

Die folgenden Beispiele erläutern die Erfindung. Prozente bedeuten dabei jeweils Gewichtsprozente.

### Beispiel 1:

a) Herstellung von sulfoniertem Phthalimidomethylkupferphthalocyanin
   24,7 g Kupferphthalocyanin werden unter Einhaltung der Temperatur unter 60°C zu 152 g 98%iger Schwefelsäure gegeben. Dann werden 22,9 g Phthalimid und 5 g 97%iges Paraformaldehyd zugegeben und die Mischung wird gerührt bis die Temperatur konstant bleibt. Anschliessend werden 132,6 g 20%iges Oleum unter kräftigem Rühren, damit die Temperatur unter 80°C bleibt, zugegeben und 6 Stunden bei 80°C weitergerührt.
   Die Reaktionsmischung wird unter kräftigem Rühren in 930 g Wasser gegossen und das ausgefallene Produkt abfiltriert und mit heissem Wasser neutral gewaschen. Eine durch Lösungsmittelextraktion und Trocknen gereinigte Probe zeigt einen Phthalimidomethylgehalt von 2,3 Gruppen/Molekül und einen Sulfonsäuregehalt von 0,07 Gruppen/Molekül. Die Ausbeute beträgt 40 g.
b) Einarbeitung des Additivs ins Pigment
   29,3 g Kupferphthalocyanin, 55,0 g wasserfreies Calciumchlorid und 5 g kristallines Natriumacetat werden in einer Schwingmühle mit 12 mm-Stahlkugeln während 12 Stunden gemahlen, dann in einem Isopropanol/Wasser-Gemisch (93:17,280 g) enthaltend 10 g einer 16,6%igen alkalischen Kolophoniumlösung aufgeschlämmt. Die Mischung wird eine Stunde unter Rühren am Rückfluss erhitzt, dann werden 160 g heisses Wasser zugegeben. Das Isopropanol wird azeotrop entfernt und zum Rückstand werden noch 68 g kaltes Wasser gegeben.
   1,6 g des reinen Produkts aus (a) werden in Wasser aufgeschlämmt und zur Kupferphthalocyaninaufschlämmung gegeben. Nach 30 Minuten Rühren werden 16,6 g 35%ige Salzsäure zugegeben und die Mischung wird eine Stunde bei 50-60°C gerührt. Das Pigment wird abfiltriert, mit kaltem Wasser gewaschen bis das Filtrat chloridfrei ist und bei 60°C getrocknet Die Ausbeute beträgt 31,6 g.
c) Einarbeitung des stabilisierten Pigments in HDPE und Hitzebeständigkeits-Bestimmung
   Das gemäss (b) hergestellte Pigment wird vermahlen und durch ein Sieb mit 150 µm Maschenweite gesiebt. In eine Zweiwalzenmühle, deren Walzen bei Walzenabstand von 0,3 mm auf 150 bzw. 110°C geheizt werden, werden 100 g Polyethylen hoher Dichte eingeführt. Das Polymere wird eine Minute im Walzenstuhl gemahlen, dann wird 0,1 g Pigment innerhalb 30 Sekunden auf das Polymer gestreut. Nach dem Mahlen während 8 Minuten wird der Walzenabstand auf 1,5 mm eingestellt und die Folie wird abgezogen, auf Raumtemperatur abkühlen gelassen und abgeschnitzelt.
   Das abgeschnitzelte Material wird in der Spritzgussmaschine bei 200°C zu Formstücken verspritzt, welche eine farbstarke blaue Nuance aufweisen. Das Verfahren wird mehrmals wiederholt, wobei die Temperatur der Spritzgussmaschine jedes Mal um 20°C erhöht wird, bis 320°C erreicht werden (5 Minuten Verweilzeit bei jeder Temperatur). Die stark blaue Farbe bleibt bis zu einer erheblich höheren Temperatur erhalten, als in den Fällen, wo das Pigment wie in (b) beschrieben hergestellt wird, aber ohne Beimengung von sulfoniertem Phthalimidomethylkupferphthalocyanin.

### Beispiel 2:

a) Herstellung von sulfoniertem Phthalimidomethylzinkphthalocyanin
   53,6 g Zinkphthalocyanin werden zu 325 g 98%iger Schwefelsäure gegeben und 30 Minuten gerührt. Dann werden 49,5 g Phthalimid und 10,8 g 97%iges Paraformaldehyd zugegeben und die Mischung wird weitere 30 Minuten gerührt, während denen die Temperatur adiabatisch steigt. Anschliessend werden 286 g 20%iges Oleum innert 30 Minuten zugegeben und 6 Stunden bei 80°C gerührt.
   Die Reaktionsmischung wird unter kräftigem Rühren in 1 Liter eisgekühltem Wasser gegossen. Das ausgefallene grünliche Produkt wird abfiltriert und mit heissem Wasser neutral gewaschen. Eine durch Lösungsmittelextraktion und Trocknen gereinigte Probe zeigt einen Phthalimidomethylgehalt von 3 Gruppen/Molekül und einen Sulfosäuregehalt von 0,3 Gruppen/Molekül. Die Ausbeute beträgt 98 g.
b) Einarbeitung des Additivs ins Pigment
   Das Produkt von Beispiel 2a) wird gemäss dem unter Beispiel 1b) beschriebenen Verfahren in das Kupferphthalocyaninpigment eingearbeitet und zwar in einer Menge, die einer 5%igen Konzentration entspricht.
c) Einarbeitung des stabilisierten Pigments in HDPE und Hitzebeständigkeits-Bestimmung
   Das gemäss Beispiel 2b) erhaltene Produkt wird wie unter Beispiel 1c) beschrieben in 0,1%iger Konzentration in HDPE eingearbeitet. Man erhält Formstücke mit einer farbstarken blauen Nuance, die eine erheblich höhere Hitzebeständigkeit aufweisen im Vergleich zu denjenigen, die ein Pigment ohne Zusatz des sulfonierten Phthalimidomethylzinkphthalocyanins aus Beispiel 2a) enthalten.

Beispiel 3: Ein sulfoniertes Phthalimidomethylkupferphthalocyanin mit einem Phthalimidomethylgehalt von 3 Gruppen/Molekül wird gemäss dem in Beispiel 1a) beschriebenen Verfahren hergestellt, mit der einzigen Ausnahme, dass die Menge an 20%igem Oleum auf 165,8 g erhöht wird.

Nach Einarbeitung in 5%iger Konzentration in Kupferphthalocyanin gemäss Beispiel 1b) und Pigmentierung von HDPE in 0,1%iger Konzentration (gemäss Beispiel 1c) mit dem erhaltenen stabilisierten Pigment zeigt das Produkt eine erheblich höhere Hitzebeständigkeit im Vergleich zu einem Produkt dem kein sulfoniertes Phthalimidomethylkupferphthalocyanin beigemengt wird.

### Beispiel 4:

a) Herstellung von sulfoniertem Tetrachlorphthalimidomethylkupferphthalocyanin
   14,4 g Kupferphthalocyanin werden zu 88,3 g 98%iger Schwefelsäure zugegeben. Nach 30 Minuten werden 25 g Tetrachlorphthalimid und 2,7 g 97%iges Paraformaldehyd zugegeben. Nach weiteren 30 Minuten werden noch 76 g 20%iges Oleum zufliessen gelassen und die Reaktionsmischung wird 6 Stunden bei 80°C gerührt.
   Die Reaktionsmischung wird unter kräftigem Rühren in einem Liter Wasser gegossen und das ausgefallene Produkt abfiltriert und mit heissem Wasser neutral gewaschen. Eine durch Lösungsmittelextraktion gereinigte Probe zeigt einen Tetrachlorphthalimidomethylgehalt von 2,5 Gruppen/Molekül und einen Sulfonsäuregehalt von 0,2 Gruppen/Molekül. Die Ausbeute beträgt 40 g (81 % Reinheit).
b) Einarbeitung des Additivs ins Pigment
   Das Produkt von Beispiel 4a) wird gemäss dem unter Beispiel 1b) beschriebenen Verfahren in einer 5%igen Konzentration in das Kupferphthalocyaninpigment eingearbeitet.
c) Einarbeitung des stabilisierten Pigments in HDPE und Hitzebeständigkeits-Bestimmung
   Das gemäss Beispiel 4b) erhaltene Produkt wird wie unter Beispiel 1c) beschrieben in 0,1%iger Konzentration in HDPE eingearbeitet. Man erhält blaue Formstücke, die eine erheblich höhere Hitzebeständigkeit aufweisen im Vergleich zu denjenigen, die ein Pigment ohne Zusatz des Additivs von Beispiel 4a) enthalten.

### Beispiel 5:

a) Einarbeitung des Additivs ins Pigment
   16 g Kupferphthalocyanin (1,6 % Chlorgehalt), 22,3 g Natriumacetat krist. und 44,5 g Natriumchlorid werden 4½ Stunden in Gegenwart von 12 mm-Stahlkugeln in einer Vibrationsmühle gemahlen und dann in 320 g Wasser aufgeschlämmt. 1,29 g des Produkts von Beispiel 1a) (100%ig) werden in Wasser aufgeschlämmt und zur Kupferphthalocyaninaufschlämmung zugegeben. Nach 30 Minuten Rühren werden 6,7 g 35%ige Salzsäure zugegeben und die Reaktionsmischung wird eine Stunde bei 50-60°C gerührt. Das Pigment wird abfiltriert, mit kaltem Wasser gewaschen, bis das Filtrat chloridfrei ist, dann bei 60°C getrocknet. Die Ausbeute beträgt 16,5 g.
b) Einarbeitung des stabilisierten Pigments in HDPE und Hitzebeständigkeits-Bestimmung
   Das gemäss Beispiel 5a) erhaltene stabilisierte Pigment wird wie unter Beispiel 1c) beschrieben in 0,1%iger Konzentration in HDPE eingearbeitet. Man erhält blaue Formstücke, die eine erheblich höhere Hitzebeständigkeit aufweisen im Vergleich zu Produkten die kein Additiv gemäss Beispiel 1a) enthalten.

Beispiel 6: Das gemäss Beispiel 1b) hergestellte Pigment wird vermahlen und durch ein Sieb mit einer Maschenweite von 150 µm gesiebt und in 0,1%iger Konzentration mittels einer Zweiwalzenmühle bei 190°C in ABS (Acrylonitril-Butadien-Styrol-Copolymer) eingearbeitet. Das Material wird in verschiedenen Operationen ausgehend von 200°C in einer Spritzgussmaschine zu Formstücken verspritzt, wobei die Temperatur jedes Mal um 20°C erhöht wird (5 Minuten Verweilzeit bei jeder Temperatur). Die stark blaue Farbe bleibt bis zu einer erheblich höheren Temperatur erhalten, als in den Fällen, wo kein Additiv gemäss Beispiel 1a) beigemengt wird.

Beispiel 7: Das gemäss Beispiel 1b) hergestellte Pigment wird vermahlen und durch ein Sieb mit 150 µm Maschenweite gesiebt. In eine Zweiwalzenmühle, deren Walzen bei Walzenabstand von 0,3 mm auf 150 bzw. 110°C geheizt werden, werden 100 g Polyethylen hoher Dichte eingeführt. Das Polymere wird eine Minute im Walzenstuhl gemahlen, dann wird 1 g feingepulvertes Titandioxid innerhalb 30 Sekunden auf das Polymer gestreut. Nach 30 Sekunden Mahlen wird 0,1 g des blauen Pigments innerhalb weiterer 30 Sekunden gestreut. Nach dem Mahlen während 8 Minuten wird der Walzenabstand auf 1,5 mm eingestellt und die Folie wird abgezogen, auf Raumtemperatur abkühlen gelassen und abgeschnitzelt. Das abgeschnitzelte Material wird in einer Spritzgussmaschine bei 200°C zu Formstücken verspritzt. Das Verfahren wird mehrmals wiederholt, wobei die Temperatur der Spritzgussmaschine jedes Mal um 20°C bis 320°C erhöht wird (5 Minuten Verweilzeit bei jeder Temperatur).

Die erhaltenen blauen opaken Formstücke zeigen eine unveränderte Nuance bis zu einer erheblich höheren Temperatur, als diejenigen, bei denen kein Additiv gemäss Beispiel 1a) zugegeben wird.

Beispiele 8-12: Die folgenden Additive werden in einer 5%igen Konzentration nach der unter Beispiel 1b) beschriebenen Methode ins Pigment eingearbeitet:
8. Sulfoniertes Maleinimidomethylkupferphthalocyanin enthaltend 1,27 Maleinimidomethylgruppen und 0,08 Sulfonsäuregruppen pro Kupferphthalocyaninmolekül;
9. Sulfoniertes Methylmaleinimidomethylkupferphthalocyanin enthaltend 2,3 Methylmaleinimidomethylgruppen und 0,07 Sulfonsäuregruppen pro Kupferphthalocyaninmolekül;
10. Sulfoniertes Dimethylmaleinimidomethylkupferphthalocyanin enthaltend 2,3 Dimethylmaleinimidomethylgruppen und 0,07 Sulfonsäuregruppen pro Kupferphthalocyaninmolekül.
11. Sulfoniertes 1,8-Naphthalindicarboximidomethylkupferphthalocyanin enthaltend 2,3 Naphthalindicarboximidgruppen und 0,07 Sulfonsäuregruppen pro Kupferphthalocyaninmolekül.
12. Sulfoniertes Diphensäureimidomethylkupferphthalocyanin enthaltend 2,3 Diphensäureimidomethylgruppen und 0,07 Sulfonsäuregruppen pro Kupferphthalocyaninmolekül.

Beispiel 13: Die gemäss Beispiel 1b) hergestellte Pigmentzusammensetzung wird vermahlen und durch ein Sieb mit 150 µm Maschenweite gesiebt. Eine homogene Mischung aus 100 g Polybutylenterephthalat-Harz, 1,0 g fein gepulvertes Titandioxid und 0,2 g Pigment wird bei 260°C extrudiert und granuliert. Das erhaltene Granulat wird in einer Spritzgussmaschine bei 260°C zu Formstücken verspritzt, welche eine farbstarke blaue Nuance aufweisen. Das Spritzgussverfahren wird bei 260, 275 und 290°C mit jeweiliger Verweilzeit von 5 Minuten wiederholt. Die blaue Farbe bleibt bis zur höchsten Temperaturstufe auf ein erheblich höheres Gleichmässigkeitsniveau als bei Produkten bei denen kein sulfoniertes Phthalimidomethylkupferphthalocyanin eingearbeitet wird.

Beispiel 14: Die gemäss Beispiel 1b) hergestellte Pigmentzusammensetzung wird vermahlen und durch ein Sieb mit 150 µm Maschenweite gesiebt. Eine homogene Mischung aus 100 g Polycarbonat/Polybutylenterephthalat-Legierung und 0,1 g Pigment wird bei 260°C extrudiert und granuliert. Das erhaltene Granulat wird in einer Spritzgussmaschine bei 260°C zu Formstücken verspritzt, welche eine farbstarke blaue Nuance aufweisen. Das Spritzgussverfahren wird bei 260, 270, 280, 290 und 300°C mit jeweiliger Verweilzeit von 5 Minuten wiederholt. Die blaue Farbe bleibt bis zur höchsten Temperaturstufe auf ein erheblich höheres Gleichmässigkeitsniveau als bei Produkten bei denen kein sulfoniertes Phthalimidomethylkupferphthalocyanin eingearbeitet wird.

Beispiel 15: Die gemäss Beispiel 1b) hergestellte Pigmentzusammensetzung wird in Analogie zu dem in Beispiel 1c) beschriebenen Verfahren in einer Konzentration von 0,1 % in Polypropylen eingearbeitet. Die stark blaue Farbe bleibt bis zu einer erheblich höheren Temperatur erhalten, als in den Fällen, wo das Pigment wie in Beispiel 1b) beschrieben hergestellt wird, aber ohne Beimengung von sulfoniertem Phthalimidomethylkupferphthalocyanin.

Beispiel 16: Die gemäss Beispiel 1b) hergestellte Pigmentzusammensetzung wird in Analogie zu dem in Beispiel 1c) beschriebenen Verfahren in einer Konzentration von 0,1 % in Polystyrol eingearbeitet. Die stark blaue Farbe bleibt bis zu einer erheblich höheren Temperatur erhalten, als in den Fällen, wo das Pigment wie in Beispiel 1b) beschrieben hergestellt wird, aber ohne Beimengung von sulfoniertem Phthalimidomethylkupferphthalocyanin.

## Patentansprüche

1. Thermoplastische Harzzusammensetzung enthaltend
A) ein thermoplastisches Harz,
B) ein Metallphthalocyaninpigment und
C) 0,5 bis 30 Gew.%, bezogen auf das Pigment B) eines als Hitzestabilisator für die Komponente B wirkenden Metallphthalocyanins der Formel 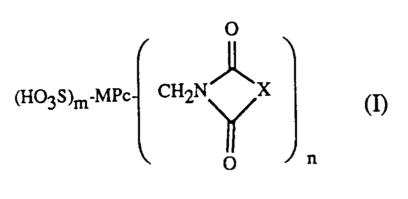
worin Pc ein unsubstituierter oder durch bis zu vier Chlor oder Bromatome substituierter Phthalocyaninrest ist, M Wasserstoff oder ein zur Bildung eines Metallphthalocyanins geeignetes Metall bedeutet, m einen Wert zwischen 0,05 und 1,0 und n einen Wert zwischen 0,1 und 4,0 bedeuten und X ein Rest ist, das zusammen mit der Gruppe 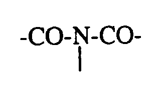 ein 5-, 6- oder 7-gliedriges cyclisches Imid bildet.

2. Harzzusammensetzung gemäss Anspruch 1, worin MPc einen Kupferphthalocyaninrest ohne Chlor oder Brom bedeutet.

3. Harzzusammnensetzung gemäss Anspruch 1, worin m einen Wert zwischen 0,05 und 0,2 bedeutet.

4. Harzzusammensetzung gemäss Anspruch 1, worin n einen Wert zwischen 1,0 und 3,0 bedeutet.

5. Harzzusammensetzung gemäss Anspruch 1, worin das thermoplastische Harz (A) Gummi oder. Polyethylen hoher Dichte, Polyburylenterephthalat, Polykarbonat, Polyamid, Polyphenylenoxid, Polyether-Etherketon, Polyphenylensulfid, Polyethersulfon, Acrylnitril-Butadien-Styrol, Polypropylen, Polystyrol, Polyacetal oder eine Legierung derselben ist.

6. Harzzusammensetzung gemäss Anspruch 1, worin das Metallphthalocyanin (B) unchloriertes Kupferphthalocyanin ist.

7. Harzzusammensetzung gemäss Anspruch 1, worin das Metallphthalocyanin (B) in einer Menge von bis zu 30 Gew.%, bezogen auf die Komponente (A) vorhanden ist.

8. Harzzusammensetzung gemäss Anspruch 7, worin das Metallphthalocyanin (B) in einer Menge zwischen 0,001 und 3 Gew.%, bezogen auf die Komponente (A) vorhanden ist.

9. Harzzusammensetzung gemäss Anspruch 1, worin in der Verbindung der Formel 1 X zusammen mit der Gruppe 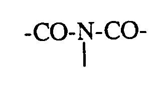 einen Succinimid-, Maleinimid-, Itaconimid-, Phthalimid-, Tetrahydrophthalimid-, cis-5-Norbornen-endo-2,3-dicarboximid-, 3,6-Endoxo- 1,2,3,6-tetrahydrophthalimid-, 1,2- oder 2,3-Naphthalindicarboximid- oder Chinolinimidrest bildet, wobei jedes davon unsubstituiert oder durch ein oder mehrere Halogenatome, vorzugsweise Chlor- oder Bromatome, eine oder mehrere C₁-C₂₀-Alkyl, C₃-C₂₀-Alkenyl, Nitro- oder Carboxygruppen substituiert ist.

10. Harzzusammensetzung gemäss Anspruch 1, worin in der Verbindung der Formel I X zusammen mit der Gruppe 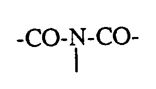 einen Phthalimidrest bildet.

11. Verfahren zur Hitzestabilisierung eines Pigments in einem pigmentierten thermoplastischen Harz, durch Einarbeitung eines Metallphthalocyaninpigments und, als Hitzestabilisator für das Metallphthalocyaninpigment, 0,5 bis 30 Gew.% eines sulfonierten Imidomethylphthalocyanins der Formel I gemäss der in Anspruch 1 angegebenen Definition, bezogen auf das Metallphthalocyaninpigment, in das thermoplastische Harz.

12. Verfahren gemäss Anspruch 11, worin die Verbindung der Formel I in das rohe Basis-Metallphthalocyaninpigment während der Konditionierung des letzteren eingearbeitet wird und die erhaltene Mischung anschliessend in das thermoplastische Harz einverleibt wird.

## Claims

1. A thermoplastic resin composition comprising
A) a thermoplastic resin,
B) a metal phthalocyanine pigment and
c) 0.5 to 30 % by weight, based on the pigment B), of a metal phthalocyanine acting as heat stabilizer for component B) and having the formula 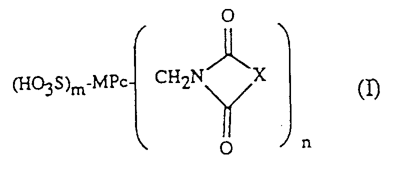
in which Pc is a phthalocyanine radical which is unsubstituted or substituted by up to four chlorine or bromine atoms, M is hydrogen or a metal suitable for forming a metal phthalocyanine, m is a value within the range of from 0.05 to 1.0, n is a value within the range of from 0.1 to 4.0 and X is a radical which in combination with the -CO-N-CO- group
forms a 5-, 6- or 7-membered cyclic imide.

2. A resin composition according to claim 1, in which MPc is a copper phthalocyanine radical containing no chlorine or bromine.

3. A resin composition according to claim 1, in which m is a value within the range of from 0.05 to 0.2.

4. A resin composition according to claim 1, in which n is a value within the range of from 1.0 to 3.0.

5. A resin composition according to claim 1, in which the thermoplastic resin (A) is rubber or high density polyethylene, polybutylene terephthalate, polycarbonate, polyamide, polyphenylene oxide, polyether ether ketone, polyphenylene sulfide, polyether sulfone, acrylonitrilebutadiene-styrene, polypropylene, polystyrene, polyacetal or an alloy thereof.

6. A resin composition according to claim 1, in which the metal phthalocyanine (B) is unchlorinated copper phthalocyanine.

7. A resin composition according to claim 1, in which the metal phthalocyanine (B) is present in an amount of up to 30 % by weight, based on component (A).

8. A resin composition according to claim 7, in which the metal phthalocyanine (B) is present in an amount of from 0.001 to 3 % by weight, based on component (A).

9. A resin composition according to claim 1, in which, in the compound of the formula I, X together with the 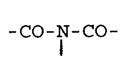 group is a succinimide, maleimide, itaconimide, phthalimide, tetrahydrophthalimide, cis-5-norbornene-endo-2,3-dicarboximide, 3,6-endoxo-1,2,3,6-tetrahydrophthalimide, 1,2- or 2,3-naphthalenedicarboximide or quinolinimide radical, each being unsubstituted or substituted by one or more halogen atoms, preferably chlorine or bromine atoms, one or more C₁-C₂₀alkyl groups, C₃-C₂₀alkenyl groups, nitro groups or carboxyl groups.

10. A resin composition according to claim 1, in which, in the compound of the formula I, X together with the 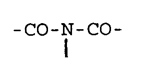 group is a phthalimide radical.

11. A process for heat stabilizing a pigment in a pigmented thermoplastic resin, by incorporating into the thermoplastic resin a metal phthalocyanine pigment and, as heat stabilizer for the metal phthalocyanine pigment, 0.5 to 30 % by weight, based on the metal phthalocyanine pigment, of a sulfonated imidomethylphthalocyanine of the formula I, as defined in claim 1.

12. A process according to claim 11, in which the compound of the formula I is incorporated into the crude metal phthalocyanine base pigment, during conditioning of the latter, and the mixture obtained is subsequently incorporated into the thermoplastic resin.

## Revendications

1. Composition de résine thermoplastique contenant
A) une résine thermoplastique
B) un pigment de phtalocyanine de métal, et
C) de 0,5 à 30% en poids, par rapport au pigment B), d'une phtalocyanine de métal, agissant en tant que stabilisant à la chaleur pour le composant B), de formule 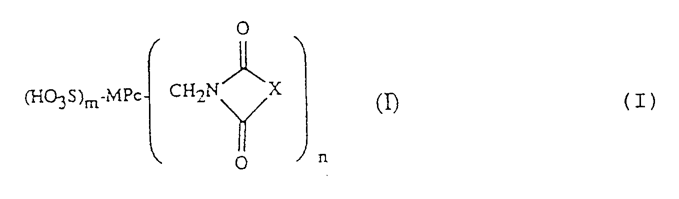
dans laquelle Pc représente un radical phtalocyanine non substitué ou substitué par jusqu'à 4 atomes de chlore ou de brome, M signifie l'hydrogène ou un métal approprié à la formation d'une phtalocyanine de métal, m représente une valeur comprise entre 0,05 et 1,0 et n une valeur comprise entre 0,1 et 4,0, et X représente un radical qui, conjointement avec le groupe 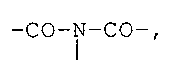 forme un imide cyclique à 5, 6 ou 7 chaînons.

2. Composition de résine selon la revendication 1, dans laquelle MPc signifie un radical de phtalocyanine de cuivre sans chlore ou brome.

3. Composition de résine selon la revendication 1, où m représente une valeur comprise entre 0,05 et 0,2.

4. Composition de résine selon la revendication 1, où n représente une valeur comprise entre 1,0 et 3,0.

5. Composition de résine selon la revendication 1, où la résine thermoplastique (A) est le caoutchouc ou les polyéthylène haute densité, téréphtalate de polybutylène, polycarbonate, polyamide, oxyde de polyphénylène, polyéther sulfone, acrylonitrile-butadiène-styrène, polypropylène, polystyrène, polycétal ou un de leurs mélanges.

6. Composition de résine selon la revendication 1, où la phtalocyanine de métal (B) est une phtalocyanine de cuivre non chlorée.

7. Composition de résine selon la revendication 1, où la phtalocyanine de métal (a) est présente dans une quantité allant jusqu'à 30% en poids par rapport au composant (A) .

8. Composition de résine selon la revendication 1, où la phtalocyanine de métal (B) est une présente dans une quantité comprise entre 0,001 et 3% en poids par rapport au composant (A).

9. Composition de résine selon la revendication 1, où dans le composé de formule I, X conjointement avec le groupe 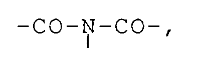 forme un radical succinimide, maléimide, itaconimide, phtalimide, tétrahydrophtalimide, cis-5-norbornèn-endo-2,3-dicarboximide, 3,6-endoxo-1,2,3,6-tétrahydrophtalimide, 1,2- ou 2,3-naphtalène-dicarboximide ou quinoléinimide, chacun d'entre eux pouvant être non substitué ou substitué par un ou plusieurs atomes d'halogènes, de préférence par des atomes de chlore ou de brome, un ou plusieurs groupes alkyle en C₁-C₂₀, alcényle en C₃-C₂₀, nitro ou carboxy.

10. Composition de résine selon la revendication 1, où dans le composé de formule I, X, ensemble avec le groupe 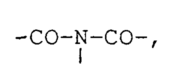 forme un radical phtalimide.

11. Procédé pour la stabilisation à la chaleur d'un pigment dans une résine thermoplastique pigmentée, par incorporation d'un pigment de phtalocyanine de métal et, en tant que stabilisant à la chaleur pour le pigment de phtalocyanine de métal, de 0,5 à 30 % en poids d'une imidométhylphtalocyanine sulfonée de formule I selon la définition donnée dans la revendication 1, par rapport au pigment de phtalocyanine de métal dans la résine thermoplastique.

12. Procédé selon la revendication 11, où le composé de formule I est incorporé dans le pigment de base brut de phtalocyanine de métal au cours du conditionnement de ce dernier et le mélange obtenu est ensuite incorporé dans la résine thermoplastique.
